# EUROPEAN PATENT SPECIFICATION

(11) **EP 2 773 072 B1**
(45) Date of publication and mention of the grant of the patent: **27.02.2019**
(21) Application number: 12844444.5
(22) Date of filing: 26.10.2012
(51) Int. Cl.: H04L 12/70, H04L 12/46, H04L 12/24, H04L 12/721

(54) **CONTROL APPARATUS, COMMUNICATION SYSTEM, VIRTUAL NETWORK MANAGEMENT METHOD, AND PROGRAM**
STEUERUNGSVORRICHTUNG, KOMMUNIKATIONSSYSTEM, VIRTUELLES NETZWERKVERWALTUNGSVERFAHREN UND PROGRAMM
APPAREIL DE CONTRÔLE, SYSTÈME DE COMMUNICATION, PROCÉDÉ DE GESTION DE RÉSEAU VIRTUEL ET PROGRAMME

(30) Priority: 28.10.2011 JP 2011237075
(43) Date of publication of application: 03.09.2014
(60) Divisional application: 18186653.4
(73) Proprietor: NEC Corporation, Tokyo 108-8001 (JP)
(72) Inventor: YAMAGUCHI, Syuuhei, Tokyo 108-8001 (JP)
(74) Representative: Vossius & Partner Patentanwälte Rechtsanwälte mbB
(86) International application number: PCT/JP2012/077679
(87) International publication number: WO 2013/062070

(56) References cited:
- EP-A1- 2 482 496
- WO-A1-2011/037104
- WO-A1-2011/118585
- CA-A1- 2 700 866
- US-A1- 2009 138 577
- US-B1- 7 586 915
- AKIRA WADA ET AL.: 'Implementation of Traffic Control Scheme Based on Trustworthy Routing' IEICE TECHNICAL REPORT vol. 111, no. 232, 06 October 2011, pages 51 - 56, XP008173093

## Description

### [Field]

The present invention relates to a control apparatus, a communication system, a virtual network management method, and a program. In particular, it relates to a control apparatus controlling packet forwarding nodes in a central manner and to a communication system, a virtual network management method, and a program for providing a virtual network service by using the control apparatus.

PTL 1 discloses a network device and a network system that perform a VLAN setting by using special packets called configuration packets and setting packets when a VLAN (Virtual Local Area Network) is configured at a layer 2 level. According to JP 2007-036959 A (PTL 1), first, to a configuration packet including an address of an end-edge network device and a port number corresponding to a single VLAN, a start-edge network device adds its own address and a port number for outputting the configuration packet. Next, the start-edge network device transmits the configuration packet. Next, a relay network device adds its own address, a port number having received the configuration packet, and a port number for outputting the configuration packet to the configuration packet. Next, the relay network device transmits the configuration packet. The end-edge network device transmits setting packets in which the VLAN and the port numbers of the start-edge and relay network devices are associated with each other to the addresses of the start-edge and relay network devices.

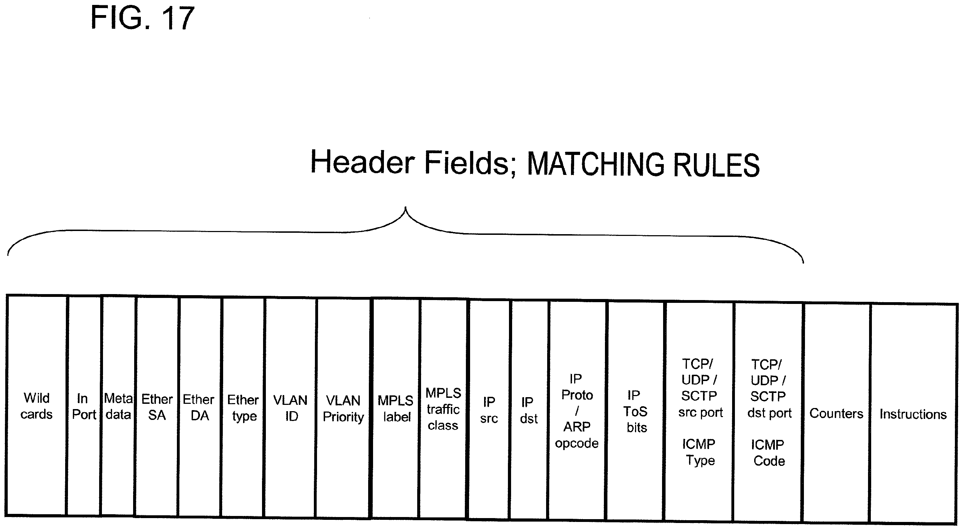

In addition, in recent years, a technique referred to as OpenFlow has been proposed (see WO 2008/095010 A1 (PTL 2) and Nick McKeown, et al., "OpenFlow: Enabling Innovation in Campus Networks," [online], [searched on October 1, 2011], Internet <URL: http://www.openflow.org/documents/openflow-wp-latest.pdf> (NPL 1) and "OpenFlow Switch Specification" Version 1.1.0 Implemented (Wire Protocol 0x02), [online], [searched on October 1, 2011], Internet <URL:http://www.openflow.org/documents/openflow-spec-v1.1.0.pdf> (NPL 2)). OpenFlow recognizes communications as end-to-end flows and performs path control, failure recovery, load balancing, and optimization on a per-flow basis. Each OpenFlow switch according to NPL 2 has a secure channel for communication with an OpenFlow controller and operates according to a flow table suitably added or rewritten by the OpenFlow controller. In the flow table, a set of the following three is defined for each flow: Match fields in which contents matched against a packet header are defined; flow statistical information (Counters); and Instructions that define processing contents (see Fig. 17).

For example, when an OpenFlow switch receives a packet, the OpenFlow switch searches the flow table for an entry having a match filed (see Fig. 17) that matches header information of the incoming packet. If, as a result of the search, the OpenFlow switch finds an entry matching the incoming packet, the OpenFlow switch updates the flow statistical information (Counters) and processes the incoming packet based on a processing content (packet transmission from a specified port, flooding, drop, etc.) written in the Instructions field of the entry. If, as a result of the search, the OpenFlow switch does not find an entry matching the incoming packet, the OpenFlow switch transmits an entry setting request to the OpenFlow controller via the secure channel. Namely, the OpenFlow switch requests the OpenFlow controller to determine a processing content for the incoming packet. The OpenFlow switch receives a flow entry corresponding to the request and updates the flow table. In this way, by using an entry stored in the flow table as a processing rule, the OpenFlow switch executes packet forwarding.

Example 2 on page 5 of NPL 1 discloses that the above mechanism can establish a virtual network as VLANs do.
US 2009/0138577 A1 relates to systems and methods for managing a network, and in particular to computer network management and security systems, in particular for controlling routing and other forwarding behaviors in a network. US7586915 B1 refers to a technique transferring data between geographically dispersed entities belonging to a virtual-local-area network (VLAN). EP2482496 A1 or rather WO 2011/037104 A1 refers to a method which, under the environment that IP addresses of virtual machines overlap, makes it possible to carry out a communication between the virtual machines and for a network manager to grasp in a communication flow condition in real time.

The following analysis has been given by the present inventor. As disclosed in PTL 1, when a virtual network is established, all interfaces relating to all switches belonging to the virtual network need to be set. In addition, if the virtual network has a larger scale, more labor is required for this setting operation, counted as a problem.

When a virtual network is established by using OpenFlow in NPLs 1 and 2, it is also necessary to define a correspondence relationship between each physical packet forwarding node (OpenFlow switch) and the virtual network, as an initial setting. In such case, too, if the virtual network has a larger scale, more labor is required for the setting operation, counted as a problem.

An object of the present invention is to provide a control apparatus, a communication system, a virtual network management method, and a program that can contribute to reduction of the labor for the setting operation performed when a virtual network service is provided in a communication system in which packet forwarding nodes are controlled in a central manner such as in the above OpenFlow. This object is achieved by the invention defined as a control apparatus according to claim 1, a method according to claim 7 and a program according to claim 8. The dependent claims define corresponding embodiments, in particular claim 6 defines a communication system.

According to a first aspect, there is provided a control apparatus, comprising: a virtual network configuration information storage unit storing a configuration(s) of a virtual network(s) configured by a packet forwarding node(s); a terminal point information storage unit associating a virtual terminal point(s) on the virtual network(s) with a terminal point(s) of the packet forwarding node(s) and storing the associated nodes; a control unit referring to information stored in the virtual network configuration information storage unit and information stored in the terminal point information storage unit and controlling packet forwarding on the virtual network(s) configured by the packet forwarding node(s); and a virtual network updating unit performing, when the control apparatus receives a packet from a source that is not connected to an existing virtual terminal point, addition of a virtual terminal point to the virtual network(s) and addition of a new entry to the terminal point information storage unit, based on a virtual terminal point addition rule(s) defining a correspondence relationship between a value in a predetermined field in a packet header and a virtual terminal point connection position on the virtual network(s).

According to a second aspect, there is provided a communication system, comprising a packet forwarding node(s) and the above control apparatus.

According to a third aspect, there is provided a virtual network management method, comprising a step of causing a control apparatus, which comprises: a virtual network configuration information storage unit storing a configuration(s) of a virtual network(s) configured by a packet forwarding node(s); a terminal point information storage unit associating a virtual terminal point(s) on the virtual network(s) with a terminal point(s) of the packet forwarding node(s) and storing the associated nodes; and a control unit referring to information stored in the virtual network configuration information storage unit and information stored in the terminal point information storage unit and controlling packet forwarding on the virtual network(s) configured by the packet forwarding node(s), to perform, when the control apparatus receives a packet from a source that is not connected to an existing virtual terminal point, addition of a virtual terminal point to the virtual network(s) and addition of a new entry to the terminal point information storage unit, based on a virtual terminal point addition rule(s) defining a correspondence relationship between a value in a predetermined field in a packet header and a virtual terminal point connection position on the virtual network(s). This method is associated with a certain machine, that is, with the control apparatus controlling the packet forwarding node(s).

According to a fourth aspect, there is provided a program, causing a computer constituting a control apparatus, which comprises: a virtual network configuration information storage unit storing a configuration(s) of a virtual network(s) configured by a packet forwarding node(s); a terminal point information storage unit associating a virtual terminal point(s) on the virtual network(s) with a terminal point(s) of the packet forwarding node(s) and storing the associated nodes; and a control unit referring to information stored in the virtual network configuration information storage unit and information stored in the terminal point information storage unit and controlling packet forwarding on the virtual network(s) configured by the packet forwarding node(s), to perform, when the control apparatus receives a packet from a source that is not connected to an existing virtual terminal point, processing of addition of a virtual terminal point to the virtual network(s) and processing of addition of a new entry to the terminal point information storage unit, based on a virtual terminal point addition rule(s) defining a correspondence relationship between a value in a predetermined field in a packet header and a virtual terminal point connection position on the virtual network(s). This program can be recorded in a computer-readable storage medium. Namely, the present invention can be embodied as a computer program product.

The present invention can contribute to reduction of the labor for the setting operation performed when a virtual network service is provided in a communication system in which packet forwarding nodes are controlled in a central manner.

### [Brief Description of Drawings]

The invention is further disclosed with reference to the drawings:
Fig. 1 is a block diagram illustrating an overall configuration according to a first exemplary embodiment of the present invention.
Fig. 2 is a block diagram illustrating a configuration of a control apparatus according to the first exemplary embodiment of the present invention.
Fig. 3 illustrates configurations of virtual networks established by using a packet forwarding node group in Fig. 1.
Fig. 4 illustrates information stored in a terminal point information storage unit of the control apparatus according to the first exemplary embodiment of the present invention.
Fig. 5 illustrates virtual terminal point addition rules stored in a virtual network updating unit of the control apparatus according to the first exemplary embodiment of the present invention.
Fig. 6 is a flowchart illustrating an operation (initial setting) of the control apparatus according to the first exemplary embodiment of the present invention.
Fig. 7 is a flowchart illustrating an operation (during an operation) of the control apparatus according to the first exemplary embodiment of the present invention.
Fig. 8 specifically illustrates the operation (during an operation) of the control apparatus according to the first exemplary embodiment of the present invention.
Fig. 9 is a diagram that follows Fig. 8.
Fig. 10 illustrates addition of a new virtual terminal point to one virtual network in Fig. 3.
Fig. 11 illustrates addition of a new entry to the terminal point information storage unit.
Fig. 12 is a diagram that follows Fig. 9.
Fig. 13 illustrates addition of a new virtual terminal point to the virtual network in Fig. 10.
Fig. 14 illustrates addition of a new entry to the terminal point information storage unit in Fig. 11.
Fig. 15 illustrates addition of more virtual terminal points to both of the virtual networks in Fig. 13.
Fig. 16 illustrates addition of new entries to the terminal point information storage unit in Fig. 14.
Fig. 17 illustrates a configuration of a flow entry in NPL 2.

First, an outline of an exemplary embodiment of the present invention will be described with reference to the drawings. In the following outline, various elements are denoted by reference characters as examples and for convenience to facilitate understanding of the present invention. Namely, the reference characters are not intended to limit the present invention to the illustrated modes.

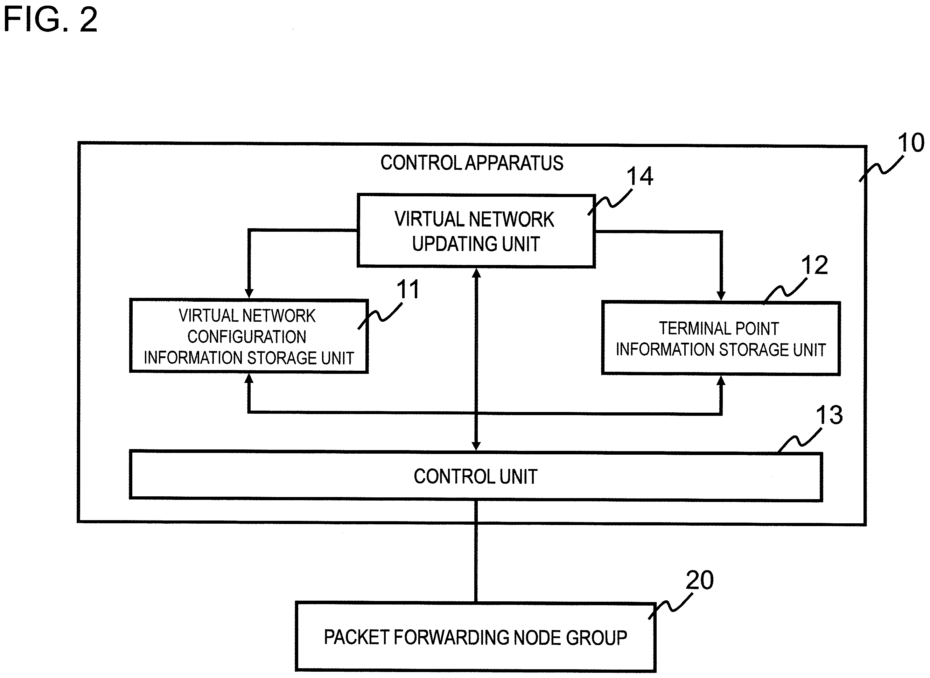

An exemplary embodiment of the present invention can be realized by a control apparatus comprising: a virtual network configuration information storage unit (see reference character 11 in Fig. 2) storing a configuration(s) of a virtual network(s) configured by a packet forwarding node(s); a terminal point information storage unit (see reference character 12 in Fig. 2) associating a virtual terminal point(s) on the virtual network(s) with a terminal point(s) of the packet forwarding node(s) and storing the associated nodes; and a control unit (see reference character 13 in Fig. 2) referring to information stored in the virtual network configuration information storage unit and information stored in the terminal point information storage unit and controlling packet forwarding on the virtual network(s) configured by the packet forwarding node(s). In addition, this control apparatus further comprises: a virtual network updating unit (see reference character 14 in Fig. 2) performing, when the control apparatus receives a packet from a source that is not connected to an existing virtual terminal point, processing of addition of a virtual terminal point to the virtual network(s) and processing of addition of a new entry to the terminal point information storage unit, based on a virtual terminal point addition rule(s) defining a correspondence relationship between a value in a predetermined field in a packet header and a virtual terminal point connection position on the virtual network(s).

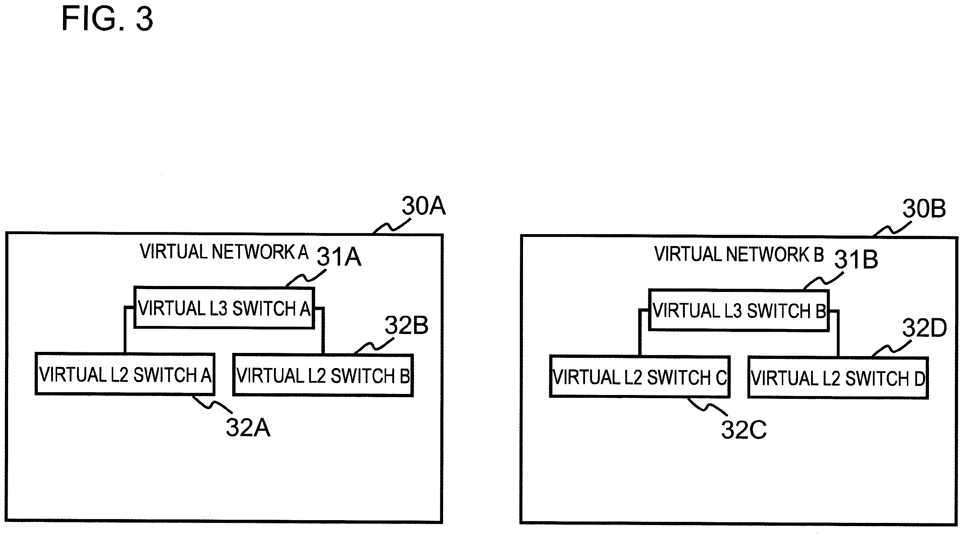

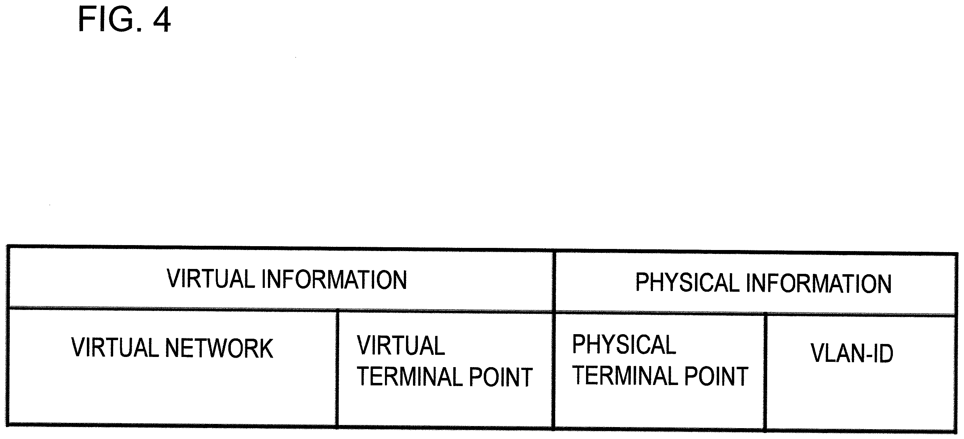

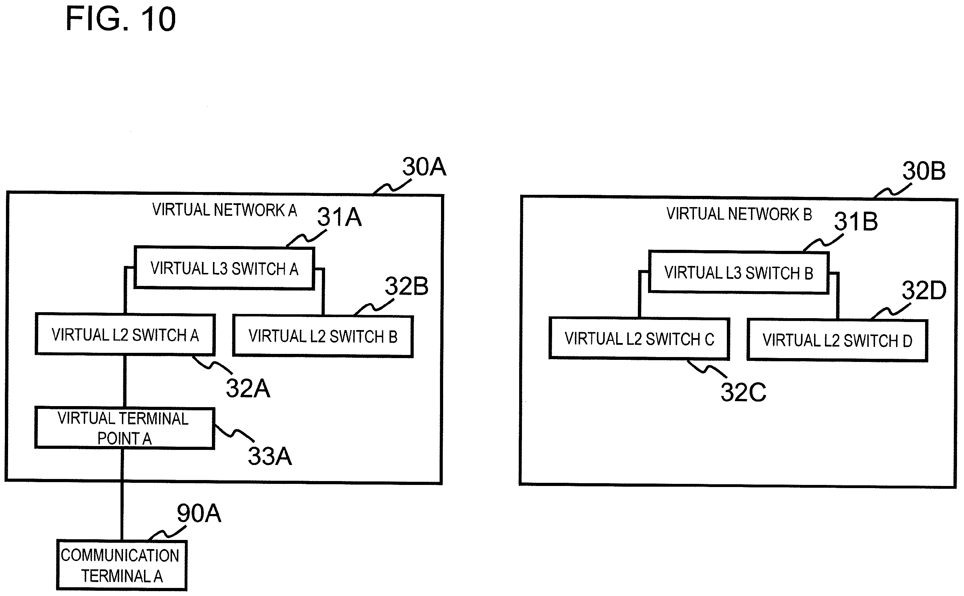

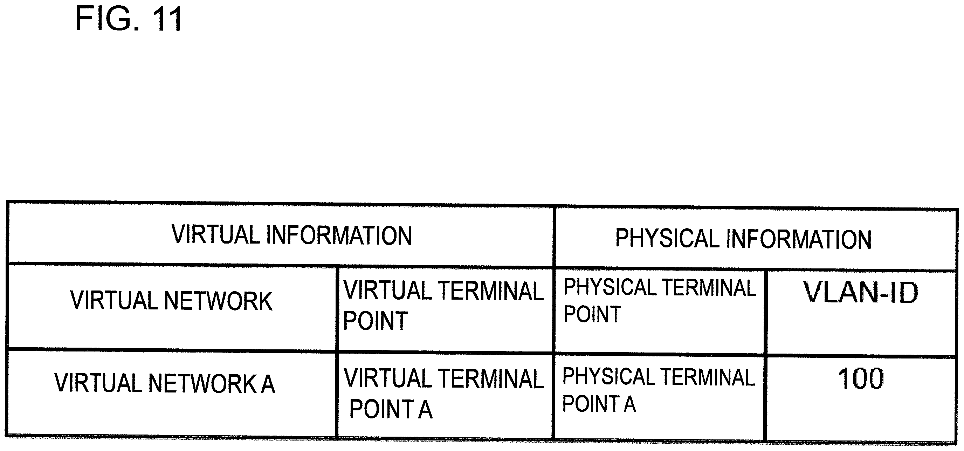

Based on the above configuration, for example, if virtual network configurations are given as illustrated in Fig. 3, by referring to the virtual terminal point addition rules in Fig. 4, virtual terminal points can be added to virtual terminal point connection positions corresponding to predetermined fields (in Fig. 4, "VLAN-ID") in incoming packets. Namely, the virtual network configurations can be updated (see Figs. 10, 13, and 15). In addition, new entries can be registered in the terminal point information storage unit (see Figs. 11, 14, and 16).

Thus, since updating of virtual network configurations and registration of new entries in the terminal point information storage unit are performed automatically, the labor for the setting operation performed when a virtual network service is provided can be reduced.

### [First exemplary embodiment]

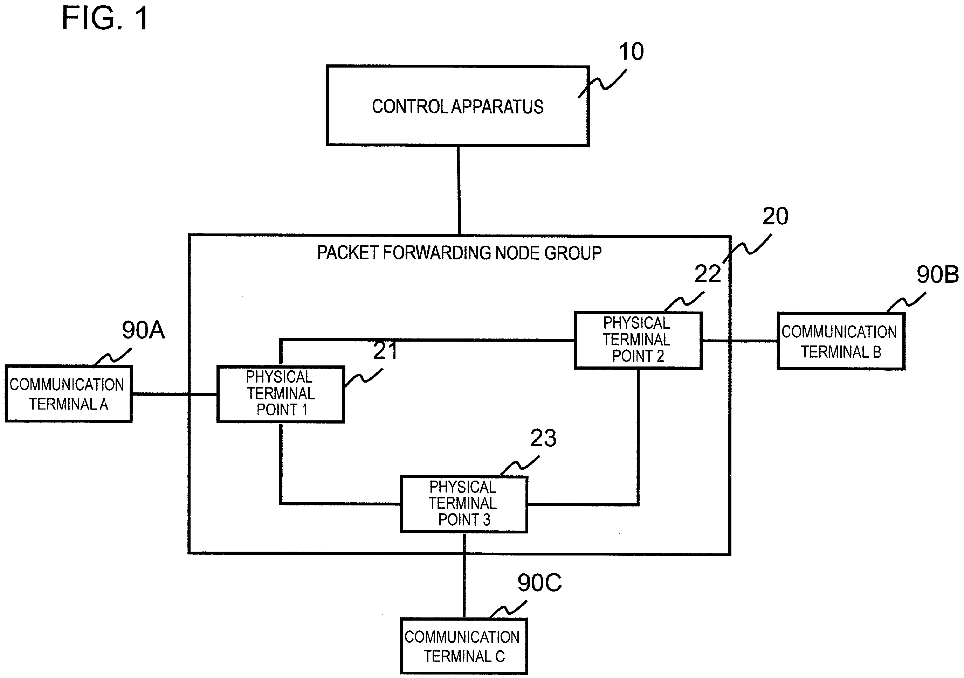

Next, a first exemplary embodiment of the present invention will be described in detail with reference to the drawings. Fig. 1 is a block diagram illustrating a configuration according to a first exemplary embodiment of the present invention. As illustrated in Fig. 1, the configuration includes a packet forwarding node group 20 arranged among communication terminals 90A to 90C and a control apparatus 10 controlling the packet forwarding node group 20.

The packet forwarding node group 20 includes a packet forwarding node(s) and is connected to the communication terminals 90A to 90C via physical terminal points (physical interfaces) 21 to 23. The packet forwarding node group 20 has a function of forwarding incoming packets to destinations, in accordance with instructions from the control apparatus 10. The present exemplary embodiment will be described assuming that the packet forwarding nodes are OpenFlow switches in NPLs 1 and 2. However, the packet forwarding nodes may be other communication devices.

The control apparatus 10 is configured by a server or the like controlling each of the packet forwarding nodes included in the packet forwarding node group 20. In addition, in the present exemplary embodiment, the control apparatus 10 will be described as an OpenFlow controller in NPLs 1 and 2. However, the control apparatus 10 may be another server or the like.

Fig. 2 is a block diagram illustrating a detailed configuration of the control apparatus 10. As illustrated in Fig. 2, the configuration includes a virtual network configuration information storage unit 11, a terminal point information storage unit 12, a control unit 13, and a virtual network updating unit 14.

The virtual network configuration information storage unit 11 stores a configuration(s) (for example, a connection relationship(s)) of a virtual network(s) configured by using the packet forwarding node group 20 illustrated in Fig. 1.

Fig. 3 illustrates examples of virtual networks configured by using the packet forwarding node group 20 illustrated in Fig. 1. In Fig. 3, two virtual networks of virtual networks 30A and 30B are configured by using the packet forwarding node group 20. In addition, each of the virtual networks 30A and 30B has a topology in which a virtual L3 switch (layer 3 switch) is connected between virtual L2 switches (layer 2 switches). Such virtual networks can be realized by control operations so that each packet forwarding node included in the packet forwarding node group 20 in Fig. 1 performs different packet processing equivalent to packet processing performed by an L2 switch and packet processing performed by an L3 switch, per virtual network. In addition, operations of each packet forwarding node can be controlled by setting flow entries described in NPL 2.

The terminal point information storage unit 12 associates virtual terminal points connected to the communication terminals 90A to 90C on a virtual network with terminal points (the physical terminal points 21 to 23 in Fig. 1) of the packet forwarding node group 20 and stores the associated nodes.

As will be described below, in the present exemplary embodiment, since terminal point information is automatically added, old or unnecessary entries do not need to be stored continuously. These unnecessary entries may be deleted by using an appropriate algorithm. In this way, conversion (search) between a physical terminal point and a virtual terminal point can be performed at high speed.

Fig. 4 illustrates information stored in the terminal point information storage unit 12 of the control apparatus 10. In Fig. 4, a combination of a virtual network and a virtual terminal point as virtual information is associated with a combination of a physical terminal point and a VLANID as physical information.

The control unit 13 realizes communication among the communication terminals 90A to 90C by referring to the above virtual network configuration information or the information stored in the terminal point information storage unit 12 and by controlling the packet forwarding nodes. For example, if the physical terminal point 21 in Fig. 1 receives a packet addressed to the communication terminal 90B from the communication terminal 90A, the control unit 13 determines whether the terminal point that has received this packet corresponds to which virtual terminal point on the virtual network, based on header information of the packet and the physical terminal point (the physical terminal point 21 in Fig. 1) that has received the packet. In addition, the control unit 13 determines a virtual terminal point located at an exit on the virtual network and a physical terminal point corresponding to this virtual terminal point located at the exit. The correspondence relationship between these physical and virtual terminal points can be determined by finding a corresponding entry from the terminal point information storage unit 12. Next, the control unit 13 determines that the virtual terminal point has received the packet, calculates a forwarding path on the virtual network to the destination, and causes the packet forwarding nodes on the forwarding path to perform packet forwarding operations.

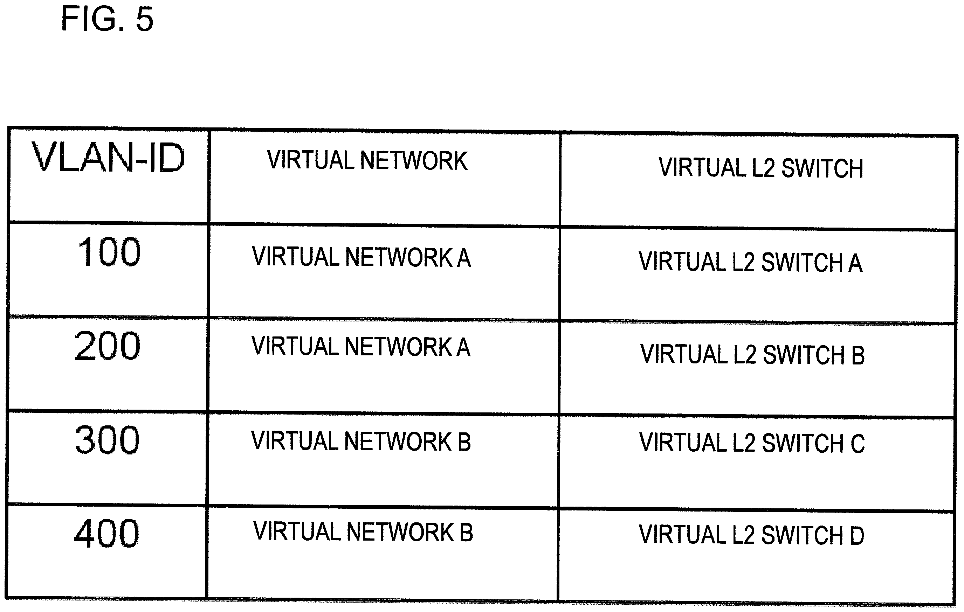

The virtual network updating unit 14 stores a virtual terminal point addition rule(s) that defines a correspondence relationship between a value in a predetermined field in a packet header and a virtual terminal point connection position on the virtual network. Fig. 5 illustrates virtual terminal point addition rules stored in the virtual network updating unit 14. In Fig. 5, a virtual network and a virtual switch can be determined by a value in the VLAN-ID field in a packet header.

When the control apparatus 10 receives the above packet, if the terminal point information storage unit 12 does not include a corresponding entry, namely, if the control apparatus 10 receives a packet received from a source that is not connected to an existing virtual terminal point, the virtual network updating unit 14 refers to the virtual terminal point addition rules, determines a virtual network and a virtual switch based on a value in a predetermined field (the VLAN-ID field in this case) in a packet header, adds a new entry to the terminal point information storage unit 12, and updates the configuration of the virtual network.

Each unit (processing means) of the control apparatus 10 illustrated in Fig. 1 can be realized by a computer program that causes a computer constituting the control apparatus 10 to use its hardware and perform each of the above processing.

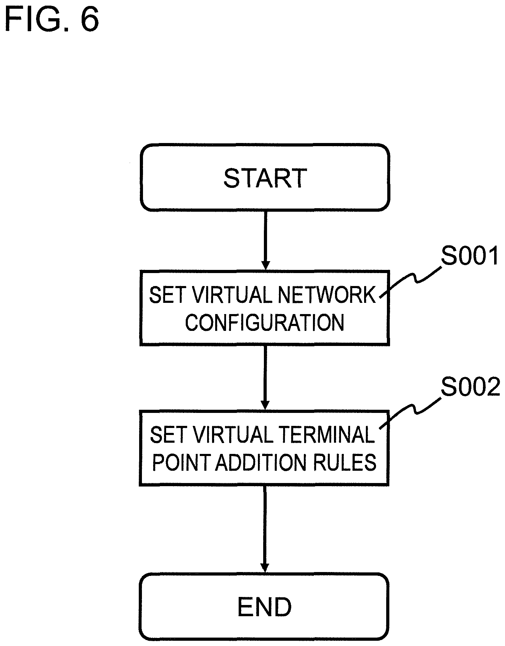

Next, an operation according to the present exemplary embodiment will be described in detail with reference to the drawings. First, an initial setting of the control apparatus 10 will be described. Fig. 6 is a flowchart illustrating an operation (initial setting) of the control apparatus according to the first exemplary embodiment of the present invention.

First, a user (network administrator) sets virtual network configuration information as illustrated in Fig. 3 in the virtual network configuration information storage unit 11 (step S001).

Next, the user (network administrator) sets the virtual terminal point addition rules as illustrated in Fig. 5 in the virtual network updating unit 14 (step S002).

In this way, an initial setting of the control apparatus 10 is completed. Thus, at this point, as illustrated in Fig. 4, no entry has been registered yet in the terminal point information storage unit 12.

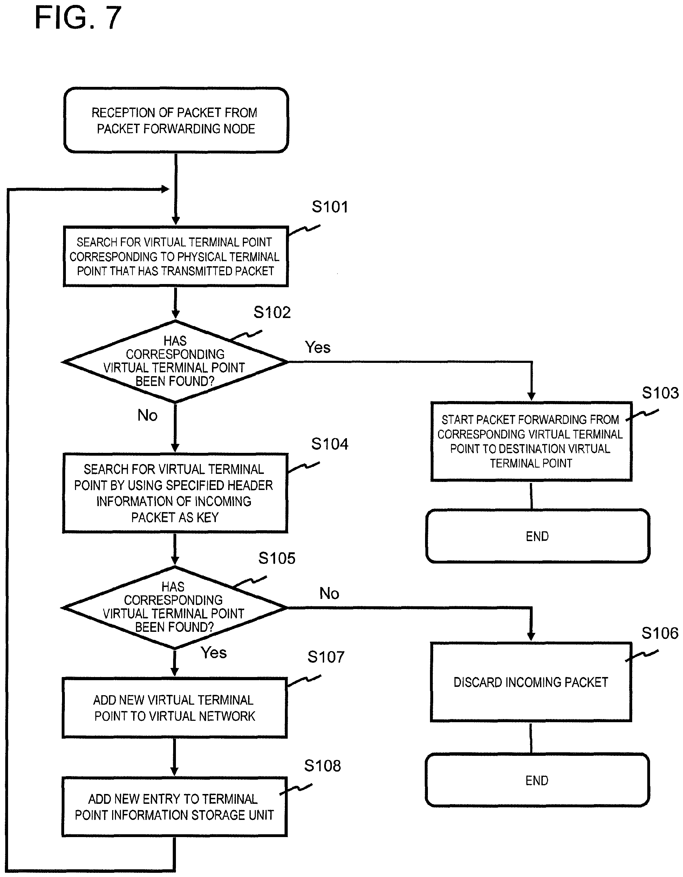

Next, an operation performed after the initial setting has been completed will be described. Fig. 7 is a flowchart illustrating an operation (during an operation) of the control apparatus according to the present exemplary embodiment. When any one of the communication terminals 90A to 90C transmits a packet, a packet forwarding node having a physical terminal point connected to the source communication terminal receives the packet. At this point, since no processing content for the packet has been given to the packet forwarding node, the packet forwarding node forwards the packet to the control apparatus and queries about a processing content. This operation corresponds to transmission of a "Packet-In message" in NPL 2.

When the control apparatus 10 receives the packet from the packet forwarding node, the control unit 13 of the control apparatus 10 refers to the terminal point information storage unit 12 and searches for a virtual terminal point corresponding to the physical terminal point that has transmitted the packet (step S101).

In this case, as illustrated in Fig. 4, since no entry is registered in the corresponding terminal point information storage unit 12, no virtual terminal point corresponding to the physical terminal point that has transmitted the packet can be found (step S102).

Next, the virtual network updating unit 14 of the control apparatus 10 refers to the virtual terminal point addition rules and determines a virtual terminal point and a virtual network to which the virtual terminal point belongs, based on a value in a certain field in a packet header of the incoming packet (step S104). If the virtual terminal point addition rules do not include a virtual terminal point corresponding to the value in the certain field in the packet header (No in step S105), the incoming packet is discarded (step S106).

If a virtual switch and a virtual network to which the virtual switch belongs are determined based on the value in the certain field in the packet header of the incoming packet (Yes in step S105), the virtual network updating unit 14 adds a new virtual terminal point that is to be connected to a virtual switch on the virtual network as illustrated in Fig. 3 (step S107; see Fig. 10).

In addition, the virtual network updating unit 14 adds a new entry in which the added new virtual terminal point and the physical terminal point are associated with each other to the terminal point information storage unit 12 (step S108; see Fig. 11).

Next, the operation returns to step S101, and the control unit 13 searches for a virtual terminal point corresponding to the physical terminal point that has transmitted the packet. Since the control unit 13 finds the entry added in the above step S108, in step S102, the control unit 13 determines that the terminal point information storage unit 12 includes a corresponding virtual terminal point (Yes in step S102).

The control unit 13 of the control apparatus 10 calculates a path from the found virtual terminal point as the starting point to the virtual terminal point located at the exist for the incoming packet and controls the packet forwarding node group 20 so that the packet is forwarded along the path (step S103).

Thus, according to the present exemplary embodiment, communication on the virtual network can be started, without previously preparing a correspondence relationship between a virtual terminal point and a physical terminal point on the virtual network. This is because a virtual terminal point addition rule(s) for determining a virtual terminal point connection position from a value in a predetermined field in a packet header is prepared. In this way, when a packet is received, a new entry is added to the terminal point information storage unit 12 and a virtual network configuration is updated.

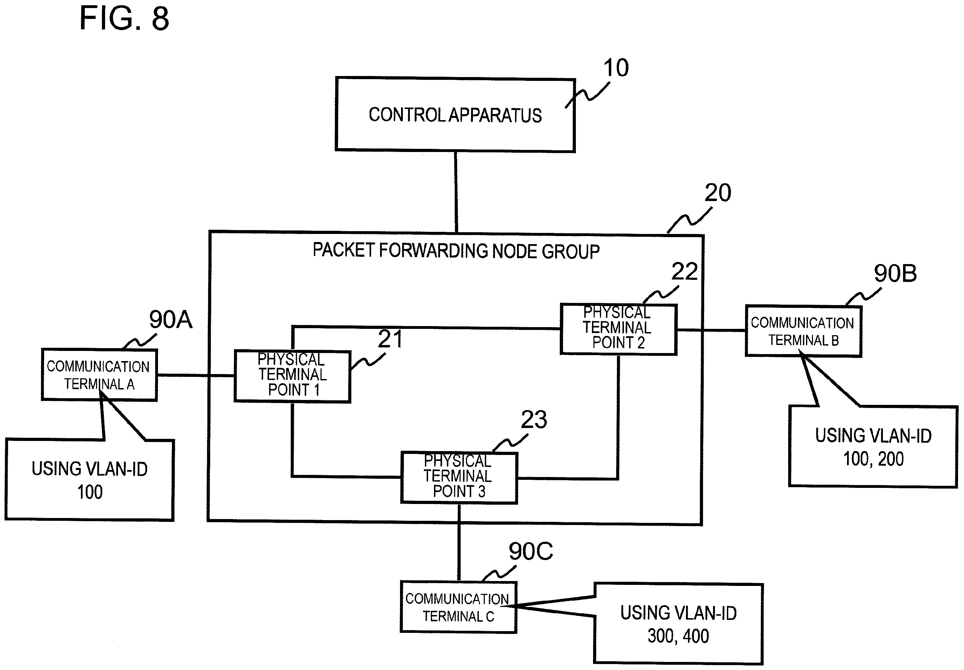

Next, the operation according to the present exemplary embodiment will be described in more detail with reference to Figs. 8 to 16. The following description will be made assuming that VLAN-IDs and L2 domains of virtual networks are associated with each other, physical terminal points are caused to belong to certain L2 domains of preset virtual networks, and virtual terminal point addition rules that can determine a virtual network and a virtual terminal point connection position (virtual switch) from a VLAN-ID of a packet has already been created (see Fig. 5).

In addition, as illustrated in Fig. 8, the following description will be made assuming that the communication terminal 90A uses VLAN-ID = 100, the communication terminal 90B uses VLAN-ID = 100 or 200, and the communication terminal 90C uses a VLAN-ID = 300 or 400. In addition, the following description will be made assuming that virtual network configurations and the virtual terminal point addition rules have already been set and no entries have been set in the terminal point information storage unit 12.

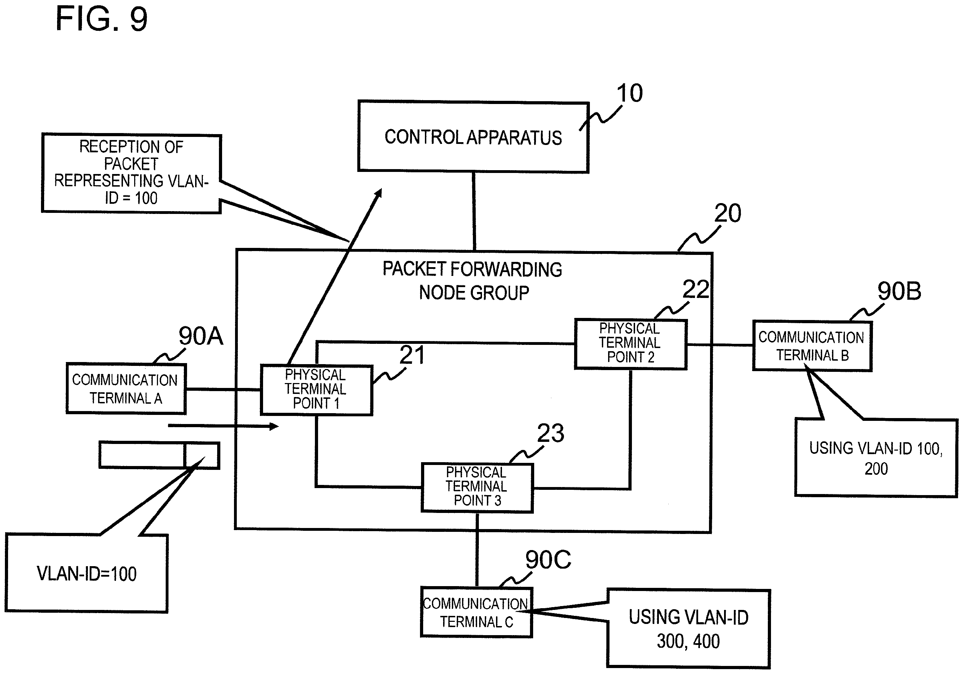

As illustrated in Fig. 9, when the physical terminal point 21 receives a packet addressed to the communication terminal 90B from the communication terminal 90A, the physical terminal point 21 forwards the packet to the control apparatus 10. When receiving the packet, the control apparatus 10 refers to the terminal point information storage unit 12 and searches for an entry including a virtual terminal point corresponding to the physical terminal point 21. However, since no entries are registered in the terminal point information storage unit 12, the control apparatus 10 cannot determine such virtual terminal point corresponding to the physical terminal point 21.

Thus, the control apparatus 10 refers to the virtual terminal point addition rules and uses the VLAN-ID of the incoming packet to determine a virtual network and a corresponding virtual terminal point connection position (virtual switch) to which the source that has transmitted the packet needs to be connected. In this case, a virtual network A and a virtual L2 switch A associated with VLAN-ID = 100 can be determined from the virtual terminal point addition rules in Fig. 5. Next, as illustrated in Fig. 10, the control apparatus 10 adds a virtual terminal point A connected to the virtual L2 switch A to a virtual network configuration. In addition, the control apparatus 10 registers a correspondence relationship between a combination of the physical terminal point that has received the incoming packet and the VLAN-ID of the physical terminal point and a combination of the determined virtual network A and virtual terminal point A in the terminal point information storage unit 12, as illustrated in Fig. 11.

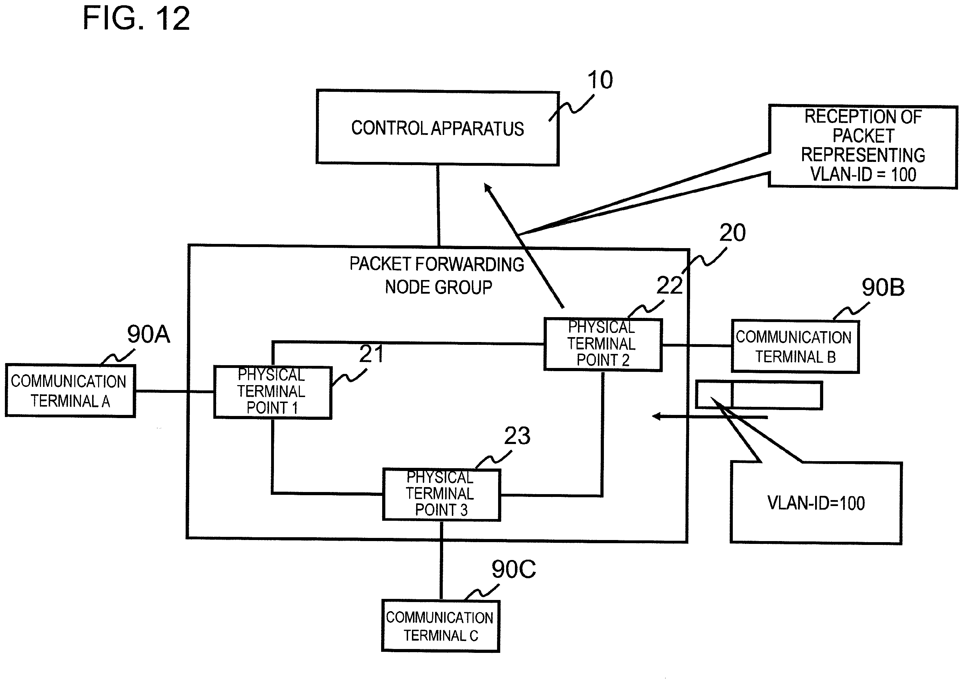

Next, as illustrated in Fig. 12, when the physical terminal point 22 receives a packet addressed to the communication terminal 90A from the communication terminal 90B, the physical terminal point 22 forwards the packet to the control apparatus 10. When receiving the packet, the control apparatus 10 refers to the terminal point information storage unit 12 and searches for an entry including a virtual terminal point corresponding to the physical terminal point 22. However, since such entry corresponding to the physical terminal point 22 is not registered, the control apparatus 10 cannot determine such virtual terminal point corresponding to the physical terminal point 22.

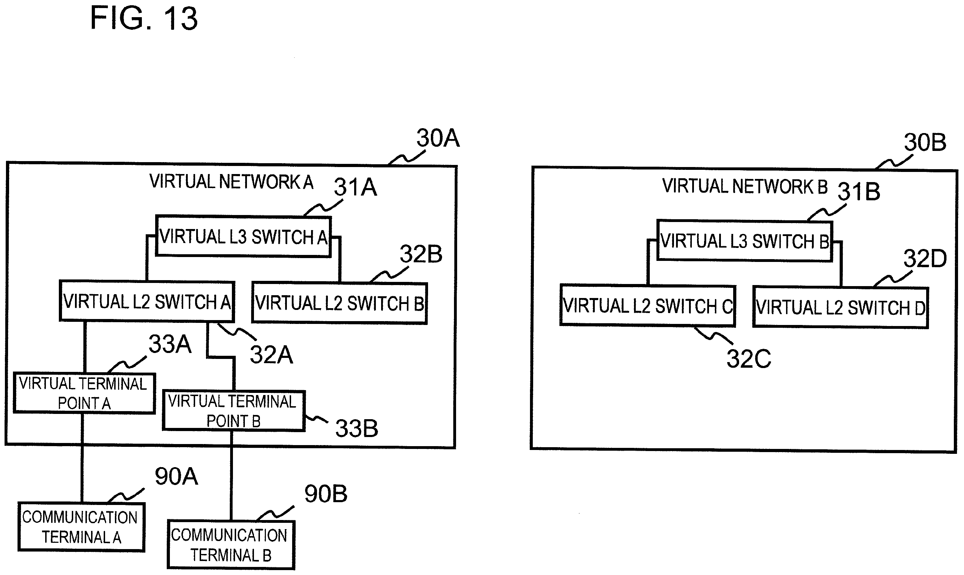

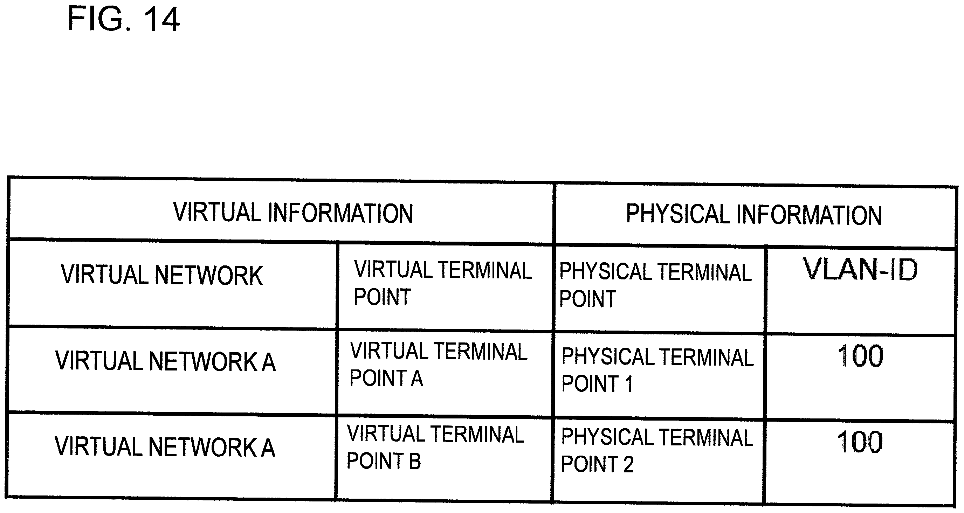

Thus, the control apparatus 10 refers to the above virtual terminal point addition rules and uses the VLAN-ID of the incoming packet to determine a virtual network and a corresponding virtual terminal point connection position (virtual switch) to which the source that has transmitted the packet needs to be connected. In this example, as is the case with the packet previously transmitted from the communication terminal 90A, from the virtual terminal point addition rules in Fig. 5, the virtual network A and the virtual L2 switch A associated with VLAN-ID = 100 can be determined. Next, as illustrated in Fig. 13, the control apparatus 10 adds a virtual terminal point B that is to be connected to the virtual L2 switch A to the virtual network configuration. In addition, as illustrated in Fig. 14, the control apparatus 10 registers a correspondence relationship between a combination of the physical terminal point that has received the incoming packet and the VLAN-ID of the physical terminal point and a combination of the determined virtual network A and the virtual terminal point B in the terminal point information storage unit 12.

As a result, the communication terminals 90A and 90B can communicate with each other on the virtual network A. More specifically, the control unit 13 of the control apparatus 10 generates a packet forwarding path connecting the virtual terminal points A and B in Fig. 13 via the virtual L2 switch and controls packet forwarding nodes so that packet forwarding is performed along the packet forwarding path.

Next, for example, if the control apparatus 10 receives a packet representing that the VLAN-ID is 200 from the communication terminal 90B, the control apparatus 10 refers to the terminal point information storage unit 12 and searches for an entry including a virtual terminal point corresponding to the physical terminal point 22 and VLAN-ID = 200. However, since no entry corresponding to the physical terminal point 22 and VLAN-ID = 200 is registered, such virtual terminal point corresponding to the physical terminal point 22 and VLAN-ID = 200 cannot be determined.

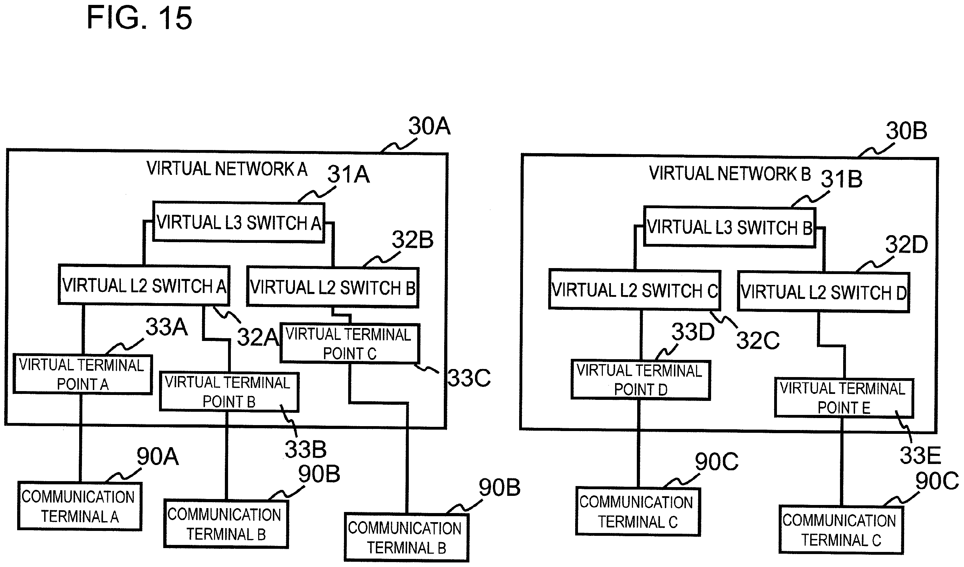

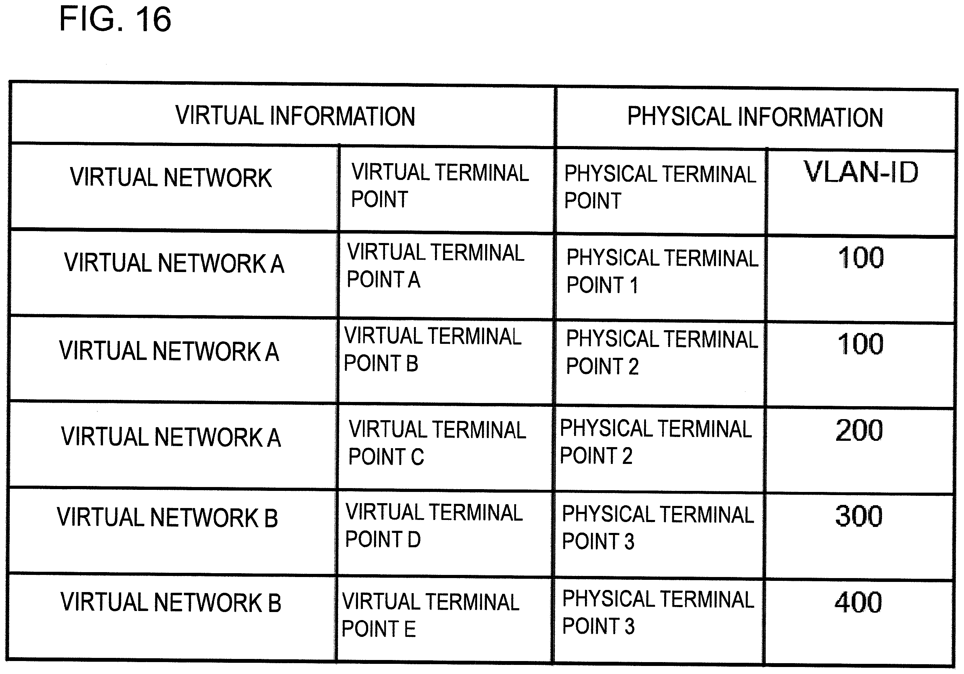

Thus, the control apparatus 10 refers to the above virtual terminal point addition rules and uses the VLAN-ID of the incoming packet to determine a virtual network and a corresponding virtual terminal point connection position (virtual switch) to which the source that has transmitted the packet needs to be connected. In this example, from the virtual terminal point addition rules in Fig. 5, the virtual network A and a virtual L2 switch B associated with VLAN-ID = 200 can be determined. Next, the control apparatus 10 adds a virtual terminal point C that is to be connected to the virtual L2 switch B to the virtual network configuration. In addition, the control apparatus 10 registers a correspondence relationship between a combination of the physical terminal point that has received the incoming packet and the VLAN-ID of the physical terminal point and a combination of the determined virtual network A and virtual terminal point C in the terminal point information storage unit 12. By repeating the processing as described above, virtual network configurations as illustrated in Fig. 15 and terminal point information as illustrated in Fig. 16 are finally generated.

As described above, according to the present exemplary embodiment, based on information about an incoming packet and a virtual terminal point addition rule(s), a virtual network and an association between corresponding physical and virtual terminal points can be updated automatically. Thus, irrespective of the scale or configuration of the physical network, the labor for the association between the corresponding physical and virtual terminal points can be reduced. The advantageous effect is more significant particularly when the physical network has a larger scale.

In addition, according to the present invention, the labor for the setting operation can also be reduced when the communication terminals 90A to 90C are moved or when a new communication terminal is connected. For example, even when the communication terminal 90A in Fig. 8 moves from the position connected to the physical terminal point 21 to the position connected to the physical terminal 23, the virtual network and the association between the corresponding physical and virtual terminal points can be updated automatically, based on an incoming packet and a virtual terminal point addition rule(s). Likewise, even when a new communication terminal is connected to any one of the physical terminal points in Fig. 8, based on a packet received from this new communication terminal and a virtual terminal point addition rule(s), the virtual network and the association between the corresponding physical and virtual terminal points can be updated automatically.

In addition, as is clear from the above exemplary embodiment, in an initial state, there is no need to associate a virtual network and a physical network. Thus, according to the present invention, copying of or movement of a virtual network can easily be realized. For example, settings of a currently-operated virtual network can be applied to another physical network arranged at a separated place.

In addition, according to the present exemplary embodiment, the start time of the system can be shortened. Since setting information in which virtual and physical networks are associated with each other does not need to be read out, the operation of the system can be started within a short time.

While each exemplary embodiment of the present invention has thus been described, the present invention is not limited thereto. Further variations, substitutions, or adjustments can be made without departing from the basic technical concept of the present invention. For example, the above exemplary embodiment has been described based on an example in which VLAN-IDs and L2 domains of virtual networks are associated with each other. However, a virtual terminal point addition rule in which an IP subnet value in a source IP (Internet Protocol) address field or a MAC (Media Access Control) address is associated with an L2 domain of a virtual network may be set. In addition, an L2 domain of a virtual network can be associated by using information other than information representing an address on a network and information representing a network itself such as an IP subnet or a MAC address. For example, an L2 domain of a virtual network can be associated based on a ToS (Type of Service) bit value in an IP header. Of course, a virtual terminal point addition rule in which the above VLAN-ID, IP subnet, MAC address, and the like are combined may be set.

Modifications and adjustments of the exemplary embodiments and examples are possible within the scope of the present invention. The present description discloses numerical value ranges. However, even if the description does not particularly disclose arbitrary numerical values or small ranges included in the ranges, these values and ranges should be deemed to have been specifically disclosed.

### [Reference Signs List]

- 10: control apparatus
- 11: virtual network configuration information storage unit
- 12: terminal point information storage unit
- 13: control unit
- 14: virtual network updating unit
- 20: packet forwarding node group
- 21 to 23: physical terminal point
- 30A, 30B: virtual network
- 31A, 31B: virtual L3 switch
- 32A to 32D: virtual L2 switch
- 33A to 33E: virtual terminal point
- 90A to 90C: communication terminal

## Claims

1. A control apparatus (10), comprising:
a virtual network configuration information storage unit (11) storing a configuration/s of a virtual network/s in a network;
each of the virtual network/s comprising a virtual terminal point/s;
each of the virtual terminal points being a representation of a packet forwarding node interface as considered in the context of the virtual network to which the virtual terminal point belongs,
a terminal point information storage unit (12)
storing a virtual terminal point/s as corresponding to a pair of an interface of a packet forwarding node/s and a value to be compared with a value in a predetermined field in a header of a packet;
a control unit (13) adapted to
receive a packet,
search the terminal point information storage unit (12) for a pair formed by the interface of a first packet forwarding node on which the packet is received and a value in the predetermined field in the header of the received packet,
in a case where a second entry matching the pair is found by the search,
determine a virtual terminal point as indicated by the second entry,
search the virtual network configuration information storage unit (11) for the determined virtual terminal point,
determine the virtual network as indicated by a first entry matching the determined virtual terminal point,
calculate a forwarding path on the determined virtual network connecting the determined virtual terminal point and the determined virtual network, and
instruct the packet forwarding node/s on the forwarding path to forward the packet according to the determined virtual terminal point and the determined virtual network, and
a virtual network updating unit (14) adapted to perform, in a case where no second entry is found by the search,
addition of a new first entry to the virtual network configuration information storage unit (11) of an entry indicating that a virtual terminal point representing the interface of the first packet forwarding node on which the packet is received is part of the virtual network/s and
addition of a new second entry to the terminal point information storage unit (12) indicating the virtual terminal point of the new first entry as corresponding to a pair of the interface of the packet forwarding node on which the packet is received and the value in the predetermined field in the header of the received packet.

2. The control apparatus (10) according to claim 1,
wherein the control apparatus (10) is adapted to delete an entry stored in the terminal point information storage unit (12) at a predetermined timing.

3. The control apparatus (10) according to claim 1 or 2;
wherein a virtual terminal point addition rule/s defines a correspondence relationship between a value in a Virtual Local Area Network field and a virtual terminal point connection position on the virtual network/s.

4. The control apparatus (10) according to any one of claims 1 to 3;
wherein a virtual terminal point addition rule/s defines a correspondence relationship between an Internet Protocol subnet value in a source Internet Protocol address field and a virtual terminal point connection position on the virtual network/s.

5. The control apparatus (10) according to any one of claims 1 to 4;
wherein a virtual terminal point addition rule/s defines a correspondence relationship between a value in a medium access control address field and a virtual terminal point connection position on the virtual network/s.

6. A communication system, comprising:
a packet forwarding node/s; and
a control apparatus (10) according to any of claims 1 to 5.

7. A method for managing a configuration of virtual network/s by a control apparatus (10) according to any of claims 1 to 5, the method comprising, by the control apparatus (10):
- receive a packet,
- search the terminal point information storage unit (12) for a pair formed by the interface of a first packet forwarding node on which the packet is received and a value in the predetermined field in the header of the received packet,
- in a case where a second entry matching the pair is found by the search,
determine a virtual terminal point as indicated by the second entry,
search the virtual network configuration information storage unit (11) for the determined virtual terminal point,
determine the virtual network as indicated by the first entry matching the determined virtual terminal point,
calculate a forwarding path on the determined virtual network connecting the determined virtual terminal point and the determined virtual network, and
instruct the packet forwarding node/s on the forwarding path to forward the packet according to the determined virtual terminal point and the determined virtual network, and
- in a case where no second entry is found by the search,
add a new first entry to the virtual network configuration information storage unit (11) of an entry indicating that a virtual terminal point representing the interface of the first packet forwarding node on which the packet is received is part of the virtual network/s and
add a new second entry to the terminal point information storage unit (12) indicating the virtual terminal point of the new first entry as corresponding to a pair of the interface of the packet forwarding node on which the packet is received and the value in the predetermined field in the header of the received packet.

8. A program for managing a configuration of virtual network/s by a control apparatus (10) according to any of claims 1 to 5, the program comprising instructions adapted, when executed by the control apparatus (10), to instruct the control apparatus to perform:
- receive a packet,
- search for the terminal point information storage unit (12) for a pair formed by the interface of a first packet forwarding node on which the packet is received and a value in the predetermined field in the header of the received packet,
- in a case where a second entry matching the pair is found by the search,
determine a virtual terminal point as indicated by the second entry,
search the virtual network configuration information storage unit (11) for the determined virtual terminal point,
determine a virtual network as indicated by the first entry matching the determined virtual terminal point,
calculate a forwarding path on the determined virtual network connecting the determined virtual terminal point and the determined virtual network, and
instruct the packet forwarding node/s on the forwarding path to forward the packet according to the determined virtual terminal point and the determined virtual network, and
- in a case where no second entry is found by the search,
add a new first entry to the virtual network configuration information storage unit (11) of an entry indicating that a virtual terminal point representing the interface of the first packet forwarding node on which the packet is received is part of the virtual network/s and
add a new second entry to the terminal point information storage unit (12) indicating the virtual terminal point of the new first entry as corresponding to a pair of the interface of the packet forwarding node on which the packet is received and the value in the predetermined field in the header of the received packet.

## Patentansprüche

1. Steuervorrichtung (10) mit:
einer Speichereinheit (11) für Konfigurationsinformation für virtuelle Netzwerke zum Speichern einer Konfiguration (von Konfigurationen) eines oder mehrerer virtueller Netzwerke in einem Netzwerk,
wobei jedes der virtuellen Netzwerke einen virtuellen Endpunkt aufweist,
wobei jeder der virtuellen Endpunkte eine Darstellung einer Paketweiterleitungsknotenschnittstelle ist, wie sie im Zusammenhang mit dem virtuellen Netzwerk, dem der virtuelle Endpunkt zugehörig ist, betrachtet wird;
einer Endpunktinformationsspeichereinheit (12), die einen oder mehrere virtuelle Endpunkte in Zuordnung zu einem Paar aus einer Schnittstelle eines oder mehrerer Paketweiterleitungsknoten und einem Wert speichert, der mit einem Wert in einem vorgegebenen Feld in einem Kopf eines Pakets verglichen werden soll;
einer Steuereinheit (13), die dazu eingerichtet ist:
ein Paket zu empfangen;
die Endpunktinformationsspeichereinheit (12) nach einem Paar zu durchsuchen, das durch die Schnittstelle eines ersten Paketweiterleitungsknotens, an dem das Paket empfangen wird, und einem Wert in dem vorgegebenen Feld im Kopf des empfangenen Pakets gebildet wird;
in einem Fall, in dem durch die Suche ein zweiter Eintrag gefunden wird, der mit dem Paar übereinstimmt:
einen durch den zweiten Eintrag angezeigten virtuellen Endpunkt zu bestimmen;
die Speichereinheit (11) für Konfigurationsinformation für virtuelle Netzwerke nach dem bestimmten virtuellen Endpunkt zu durchsuchen,
das virtuelle Netzwerk zu bestimmen, das durch einen ersten Eintrag angezeigt wird, der mit dem bestimmten virtuellen Endpunkt übereinstimmt;
einen Weiterleitungspfad auf dem bestimmten virtuellen Netzwerk zu berechnen, der den bestimmten virtuellen Endpunkt und das bestimmte virtuelle Netzwerk verbindet, und
den/die Paketweiterleitungsknoten auf dem Weiterleitungspfad anzuweisen, das Paket gemäß dem bestimmten virtuellen Endpunkt und dem bestimmten virtuellen Netzwerk weiterzuleiten; und
einer Aktualisierungseinheit (14) für virtuelle Netzwerke, die dazu eingerichtet ist, in einem Fall, in dem durch die Suche kein zweiter Eintrag gefunden wird:
der Speichereinheit (11) für Konfigurationsinformation für virtuelle Netzwerke einen neuen ersten Eintrag hinzuzufügen, der anzeigt, dass ein virtueller Endpunkt, der die Schnittstelle des ersten Paketweiterleitungsknotens anzeigt, an dem das Paket empfangen wird, Teil des virtuellen Netzwerks/der virtuellen Netzwerke ist, und
der Endpunktinformationsspeichereinheit (12) einen neuen zweiten Eintrag hinzuzufügen, der anzeigt, dass der virtuelle Endpunkt des neuen ersten Eintrags einem Paar aus der Schnittstelle des Paketweiterleitungsknotens, an dem das Paket empfangen wird, und dem Wert in dem vorgegebenen Feld im Kopf des empfangenen Pakets entspricht.

2. Steuervorrichtung (10) nach Anspruch 1,
wobei die Steuervorrichtung (10) dazu eingerichtet ist, einen in der Endpunktinformationsspeichereinheit (12) gespeicherten Eintrag zu einem vorgegebenen Zeitpunkt zu löschen.

3. Steuervorrichtung (10) nach Anspruch 1 oder 2,
wobei eine Regel(n) zum Hinzufügen eines virtuellen Endpunkts eine Korrespondenzbeziehung zwischen einem Wert in einem VLAN- (virtuelles lokales Netzwerk) Feld und einer Verbindungsposition eines virtuellen Endpunkts in dem (den) virtuellen Netzwerk(en) definiert (definieren).

4. Steuervorrichtung (10) nach einem der Ansprüche 1 bis 3,
wobei eine Regel(n) zum Hinzufügen eines virtuellen Endpunkts eine Korrespondenzbeziehung zwischen einem IP- (Internetprotokoll) Subnetz-Wert in einem Quell-IP-Adressfeld und einer Verbindungsposition für einen virtuellen Endpunkt in dem (den) virtuellen Netzwerk(en) definiert (definieren).

5. Steuervorrichtung (10) nach einem der Ansprüche 1 bis 4,
wobei eine Regel(n) zum Hinzufügen eines virtuellen Endpunkts eine Korrespondenzbeziehung zwischen einem MAC- (Media Access Control) Adressfeld und einer Verbindungsposition eines virtuellen Endpunkts in dem (den) virtuellen Netzwerk(en) definiert (definieren).

6. Kommunikationssystem mit:
einem oder mehreren Paketweiterleitungsknoten; und
einer Steuervorrichtung (10) nach einem der Ansprüche 1 bis 5.

7. Verfahren zum Managen einer Konfiguration eines oder mehrerer virtueller Netzwerke durch eine Steuervorrichtung (10) nach einem der Ansprüche 1 bis 5, wobei das Verfahren die folgenden durch die Steuervorrichtung (10) ausgeführten Schritte aufweist:
Empfangen eines Pakets;
Durchsuchen der Endpunktinformationsspeichereinheit (12) nach einem Paar, das durch die Schnittstelle eines ersten Paketweiterleitungsknotens, an dem das Paket empfangen wird, und einen Wert in dem vorgegebenen Feld im Kopf des empfangenen Pakets gebildet wird;
in einem Fall, in dem durch die Suche ein zweiter Eintrag gefunden wird, der mit dem Paar übereinstimmt:
Bestimmen eines virtuellen Endpunkts, der durch den zweiten Eintrag angezeigt wird;
Durchsuchen der Speichereinheit (11) für Konfigurationsinformation für virtuelle Netzwerke nach dem vorgegebenen virtuellen Endpunkt;
Bestimmen des virtuellen Netzwerks, das durch den ersten Eintrag angezeigt wird, der mit dem bestimmten virtuellen Endpunkt übereinstimmt;
Berechnen eines Weiterleitungspfades in dem bestimmten virtuellen Netzwerk, der den bestimmten virtuellen Endpunkt und das bestimmte virtuelle Netzwerk verbindet; und
Anweisen des Paketweiterleitungsknotens/der Paketweiterleitungsknoten auf dem Weiterleitungspfad, das Paket gemäß dem bestimmten virtuellen Endpunkt und dem bestimmten virtuellen Netzwerk weiterzuleiten; und
in einem Fall, in dem durch die Suche kein zweiter Eintrag gefunden wird:
Hinzufügen eines neuen ersten Eintrags zur Speichereinheit (11) für Konfigurationsinformation für virtuelle Netzwerke, der anzeigt, dass ein virtueller Endpunkt, der die Schnittstelle des ersten Paketweiterleitungsknotens darstellt, an dem das Paket empfangen wird, Teil des virtuellen Netzwerks/der virtuellen Netzwerke ist; und
Hinzufügen eines neuen zweiten Eintrags zur Endpunktinformationsspeichereinheit (12), der den virtuellen Endpunkt des neuen ersten Eintrags anzeigt, der einem Paar aus der Schnittstelle des Paketweiterleitungsknotens, an dem das Paket empfangen wird, und dem Wert in dem vorgegebenen Feld im Kopf des empfangenen Pakets entspricht.

8. Programm zum Managen einer Konfiguration eines oder mehrerer virtueller Netzwerke durch eine Steuervorrichtung (10) nach einem der Ansprüche 1 bis 5, wobei das Programm Anweisungen enthält, die, wenn sie durch die Steuervorrichtung (10) ausgeführt werden, dazu eingerichtet sind, die Steuervorrichtung anzuweisen, die Schritte auszuführen:
Empfangen eines Pakets;
Durchsuchen der Endpunktinformationsspeichereinheit (12) nach einem Paar, das durch die Schnittstelle eines ersten Paketweiterleitungsknotens, an dem das Paket empfangen wird, und einen Wert in dem vorgegebenen Feld im Kopf des empfangenen Pakets gebildet wird;
in einem Fall, in dem durch die Suche ein zweiter Eintrag gefunden wird, der mit dem Paar übereinstimmt:
Bestimmen eines virtuellen Endpunkts, der durch den zweiten Eintrag angezeigt wird;
Durchsuchen der Speichereinheit (11) für Konfigurationsinformation für virtuelle Netzwerke nach dem vorgegebenen virtuellen Endpunkt;
Bestimmen eines virtuellen Netzwerks, das durch den ersten Eintrag angezeigt wird, der mit dem bestimmten virtuellen Endpunkt übereinstimmt;
Berechnen eines Weiterleitungspfades in dem bestimmten virtuellen Netzwerk, der den bestimmten virtuellen Endpunkt und das bestimmte virtuelle Netzwerk verbindet; und
Anweisen des Paketweiterleitungsknotens/der Paketweiterleitungsknoten auf dem Weiterleitungspfad, das Paket gemäß dem bestimmten virtuellen Endpunkt und dem bestimmten virtuellen Netzwerk weiterzuleiten; und
in einem Fall, in dem durch die Suche kein zweiter Eintrag gefunden wird:
Hinzufügen eines neuen ersten Eintrags zur Speichereinheit (11) für Konfigurationsinformation für virtuelle Netzwerke, der anzeigt, dass ein virtueller Endpunkt, der die Schnittstelle des ersten Paketweiterleitungsknotens darstellt, an dem das Paket empfangen wird, Teil des virtuellen Netzwerks/der virtuellen Netzwerke ist;
Hinzufügen eines neuen zweiten Eintrags zur Endpunktinformationsspeichereinheit (12), der den virtuellen Endpunkt des neuen ersten Eintrags anzeigt, der einem Paar aus der Schnittstelle des Paketweiterleitungsknotens, an dem das Paket empfangen wird, und dem Wert in dem vorgegebenen Feld im Kopf des empfangenen Pakets entspricht.

## Revendications

1. Appareil de commande (10), comprenant :
une unité de stockage d'informations de configuration de réseau virtuel (11)
stockant une ou plusieurs configurations d'un ou plusieurs réseaux virtuels dans un réseau ;
chacun des un ou plusieurs réseaux virtuels comprenant un ou plusieurs points terminaux virtuels ;
chacun des points terminaux virtuels étant une représentation d'une interface de noeud d'acheminement de paquet telle qu'elle est prise en compte dans le contexte du réseau virtuel auquel le point terminal virtuel appartient,
une unité de stockage d'informations de point terminal (12)
stockant un ou plusieurs points terminaux virtuels tels qu'ils correspondent à une paire d'une interface d'un ou plusieurs noeuds d'acheminement de paquet et d'une valeur à comparer à une valeur dans un champ prédéterminé dans un en-tête d'un paquet ;
une unité de commande (13) adaptée pour
recevoir un paquet,
rechercher dans l'unité de stockage d'informations de point terminal (12) une paire formée par l'interface d'un premier noeud d'acheminement de paquet sur lequel le paquet est reçu et par une valeur dans le champ prédéterminé dans l'en-tête du paquet reçu,
dans un cas où une seconde entrée concordant avec la paire est trouvée par la recherche,
déterminer un point terminal virtuel tel qu'il est indiqué par la seconde entrée,
rechercher dans l'unité de stockage d'informations de configuration de réseau virtuel (11) le point terminal virtuel déterminé,
déterminer le réseau virtuel tel qu'il est indiqué par une première entrée concordant avec le point terminal virtuel déterminé,
calculer un chemin d'acheminement dans le réseau virtuel déterminé connectant le point terminal virtuel déterminé et le réseau virtuel déterminé, et
ordonner aux un ou plusieurs noeuds d'acheminement de paquet sur le chemin d'acheminement d'acheminer le paquet selon le point terminal virtuel déterminé et selon le réseau virtuel déterminé, et
une unité de mise à jour de réseau virtuel (14) adaptée pour réaliser, dans un cas où une seconde entrée n'est pas trouvée par la recherche,
une addition d'une nouvelle première entrée à l'unité de stockage d'informations de configuration de réseau virtuel (11) d'une entrée indiquant qu'un point terminal virtuel représentant l'interface du premier noeud d'acheminement de paquet, sur lequel le paquet est reçu, fait partie des un ou plusieurs réseaux virtuels et
une addition d'une nouvelle seconde entrée à l'unité de stockage d'informations de point terminal (12) indiquant le point terminal virtuel de la nouvelle première entrée tel qu'il correspond à une paire de l'interface du noeud d'acheminement de paquet, sur lequel le paquet est reçu, et de la valeur dans le champ prédéterminé dans l'en-tête du paquet reçu.

2. Appareil de commande (10) selon la revendication 1,
dans lequel l'appareil de commande (10) est adapté pour supprimer une entrée stockée dans l'unité de stockage d'informations de point terminal (12) à un temps de synchronisation prédéterminé.

3. Appareil de commande (10) selon la revendication 1 ou 2 ;
dans lequel une ou plusieurs règles d'addition de point terminal virtuel définissent une relation de correspondance entre une valeur dans un champ de réseau local virtuel et une position de connexion de point terminal virtuel dans les un ou plusieurs réseaux virtuels.

4. Appareil de commande (10) selon l'une quelconque des revendications 1 à 3 ;
dans lequel une ou plusieurs règles d'addition de point terminal virtuel définissent une relation de correspondance entre une valeur de sous-réseau de protocole Internet dans un champ d'adresse source de protocole Internet et une position de connexion de point terminal virtuel dans les un ou plusieurs réseaux virtuels.

5. Appareil de commande (10) selon l'une quelconque des revendications 1 à 4 ;
dans lequel une ou plusieurs règles d'addition de point terminal virtuel définissent une relation de correspondance entre une valeur dans un champ d'adresse de commande d'accès au support physique et une position de connexion de point terminal virtuel dans les un ou plusieurs réseaux virtuels.

6. Système de communication, comprenant :
un ou plusieurs noeuds d'acheminement de paquet ; et
un appareil de commande (10) selon l'une quelconque des revendications 1 à 5.

7. Procédé de gestion d'une configuration d'un ou plusieurs réseaux virtuels par un appareil de commande (10) selon l'une quelconque des revendications 1 à 5, le procédé comprenant, par l'appareil de commande (10) :
- la réception d'un paquet,
- la recherche dans l'unité de stockage d'informations de point terminal (12) d'une paire formée par l'interface d'un premier noeud d'acheminement de paquet sur lequel le paquet est reçu et par une valeur dans le champ prédéterminé dans l'en-tête du paquet reçu,
- dans un cas où une seconde entrée concordant avec la paire est trouvée par la recherche,
la détermination d'un point terminal virtuel tel qu'il est indiqué par la seconde entrée,
la recherche dans l'unité de stockage d'informations de configuration de réseau virtuel (11) du point terminal virtuel déterminé,
la détermination du réseau virtuel tel qu'il est indiqué par la première entrée concordant avec le point terminal virtuel déterminé,
le calcul d'un chemin d'acheminement dans le réseau virtuel déterminé connectant le point terminal virtuel déterminé et le réseau virtuel déterminé, et
l'ordre aux un ou plusieurs noeuds d'acheminement de paquet sur le chemin d'acheminement d'acheminer le paquet selon le point terminal virtuel déterminé et le réseau virtuel déterminé, et
- dans un cas où une seconde entrée n'est pas trouvée par la recherche,
l'ajout d'une nouvelle première entrée à l'unité de stockage d'informations de configuration de réseau virtuel (11) d'une entrée indiquant qu'un point terminal virtuel représentant l'interface du premier noeud d'acheminement de paquet, sur lequel le paquet est reçu, fait partie des un ou plusieurs réseaux virtuels et
l'ajout d'une nouvelle seconde entrée à l'unité de stockage d'informations de point terminal (12) indiquant le point terminal virtuel de la nouvelle première entrée tel qu'il correspond à une paire de l'interface du noeud d'acheminement de paquet sur lequel le paquet est reçu et de la valeur dans le champ prédéterminé dans l'en-tête du paquet reçu.

8. Programme de gestion d'une configuration des un ou plusieurs réseaux virtuels par un appareil de commande (10) selon l'une quelconque des revendications 1 à 5, le programme comprenant des instructions adaptées, lorsqu'elles sont exécutées par l'appareil de commande (10), pour ordonner à l'appareil de commande de réaliser :
- la réception d'un paquet,
- la recherche dans l'unité de stockage d'informations de point terminal (12) d'une paire formée par l'interface d'un premier noeud d'acheminement de paquet, sur lequel le paquet est reçu, et par une valeur dans le champ prédéterminé dans l'en-tête du paquet reçu,
- dans un cas où une seconde entrée concordant avec la paire est trouvée par la recherche,
la détermination d'un point terminal virtuel tel qu'il est indiqué par la seconde entrée,
la recherche dans l'unité de stockage d'informations de configuration de réseau virtuel (11) du point terminal virtuel déterminé,
la détermination d'un réseau virtuel tel qu'il est indiqué par la première entrée concordant avec le point terminal virtuel déterminé,
le calcul d'un chemin d'acheminement dans le réseau virtuel déterminé connectant le point terminal virtuel déterminé et le réseau virtuel déterminé, et
l'ordre aux un ou plusieurs noeuds d'acheminement de paquet sur le chemin d'acheminement d'acheminer le paquet selon le point terminal virtuel déterminé et le réseau virtuel déterminé, et
- dans un cas où une seconde entrée n'est pas trouvée par la recherche,
l'ajout d'une nouvelle première entrée à l'unité de stockage d'informations de configuration de réseau virtuel (11) d'une entrée indiquant qu'un point terminal virtuel représentant l'interface du premier noeud d'acheminement de paquet, sur lequel le paquet est reçu, fait partie des un ou plusieurs réseaux virtuels et
l'ajout d'une nouvelle seconde entrée à l'unité de stockage d'informations de point terminal (12) indiquant le point terminal virtuel de la nouvelle première entrée tel qu'il correspond à une paire de l'interface du noeud d'acheminement de paquet sur lequel le paquet est reçu et de la valeur dans le champ prédéterminé dans l'en-tête du paquet reçu.
